# EUROPEAN PATENT APPLICATION

(11) **EP 2 107 203 A2**
(43) Date of publication of application: **07.10.2009**
(21) Application number: 09004444.7
(22) Date of filing: 27.03.2009
(51) Int. Cl.: E06B 7/02

(54) **Ventilation system**

(30) Priority: 02.04.2008 BE 200800206
(71) Applicant: van Parys, Remi Emiel, B-8790 Waregem (BE); Klima Delta Gmbh, 42690 Solingen (DE)
(72) Inventor: Heuchemer, Klaus, 42699 Solingen (DE)
(74) Representative: Donné, Eddy

(57) **Abstract**

Ventilating element designed to be placed under a window (2), whereby the ventilating element (1) reaches from the inside (3) of the house to the outside (4) of the house, with a hard foam element or an assembly of hard foam elements, in which are provided an outlet duct (8) and a supply duct (9) with a heat exchanger (10) in between, characterised in that the heat exchanger can be installed without any technical operations or tools by pushing it in the recess in the hard foam provided to that end.

## Description

The present invention concerns a ventilating element.

In particular, the invention concerns a ventilating element which can be placed under a window.

A known ventilating element consists of a housing which can be placed under a window and which reaches from the inside of the house to the outside of the house. On the inside as well as on the outside are provided openings in the housing which are mutually connected via ducts in the housing, such that a supply duct and an outlet duct are provided for the supply of fresh outside air into the house on the one hand and the discharge of "polluted" air from the inside on the other hand.

It is clear that, due to this exchange of inside air with outside air, the temperature regulation of the inside space will be disturbed, resulting in a loss of energy.

That is why a heat exchanger is usually provided in the ventilating element which exchanges at least a part of the heat difference between the inside air and the outside air.

A problem related to the known ventilating systems is that they have a costly construction.

The present invention aims to remedy this problem.

The ventilating element according to the invention, designed to be placed under a window whereby the ventilating element reaches from the inside of the house to the outside of the house, comprises a hard foam element or an assembly of hard foam elements, in which are provided an outlet duct and a supply duct with a heat exchanger in between.

The hard foam can be made according to a simple and economical production method.

The hard foam element or hard foam elements can be made as moulding pieces or injection moulding pieces.

According to a preferred embodiment, a fan is provided in the hard foam element driven by means of a motor.

In order to better explain the characteristics of the invention, the following preferred embodiment is given by way of example only without being limitative in any way, with reference to the accompanying drawings, in which:
figure 1 represents a ventilating element according to the invention;
figures 2 and 3 show two views of the ventilating element according to the invention;
figures 4 and 5 show two views of the part indicated by arrow F4 in figure 2;
figures 6 and 7 show two views of the part indicated by arrow F6 in figure 2;
figures 8 and 9 show two views of the part indicated by arrow F8 in figure 2;
figures 10 and 11 show two views of the part indicated by arrow F10 in figure 3.

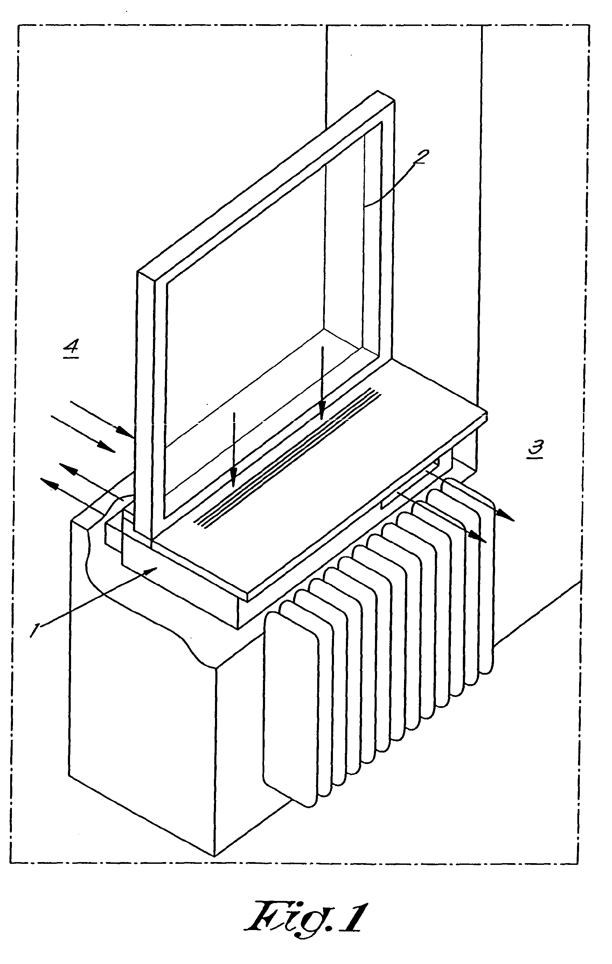

Figure 1 shows a ventilating element 1 according to the invention.

The ventilating element 1 is provided under a window 2 and reaches from the inside 3 of the house to the outside 4 of the house.

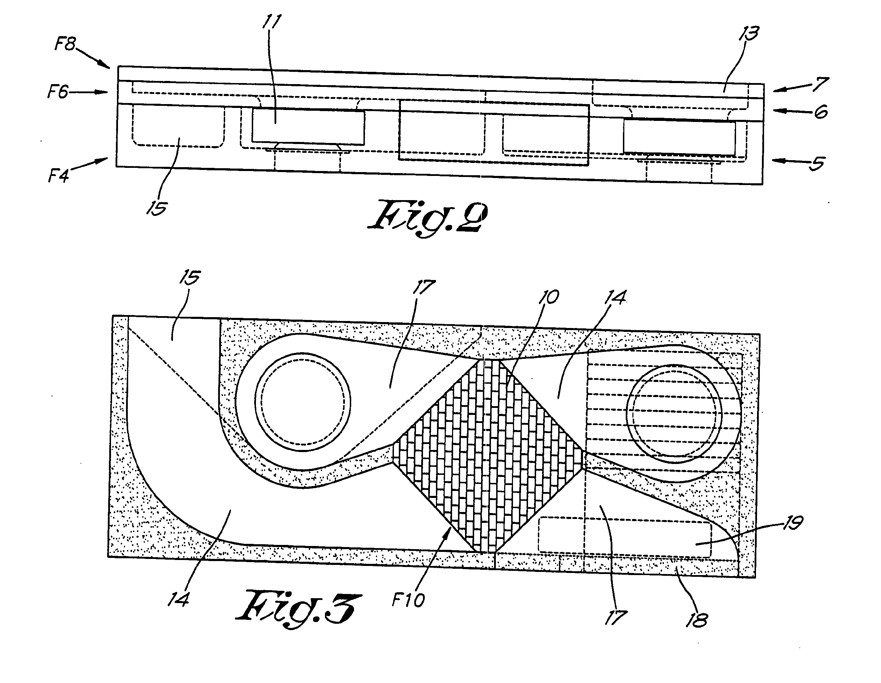

The ventilating element 1 mainly consists of an assembly of hard foam elements as is represented in more detail in figures 2 and 3.

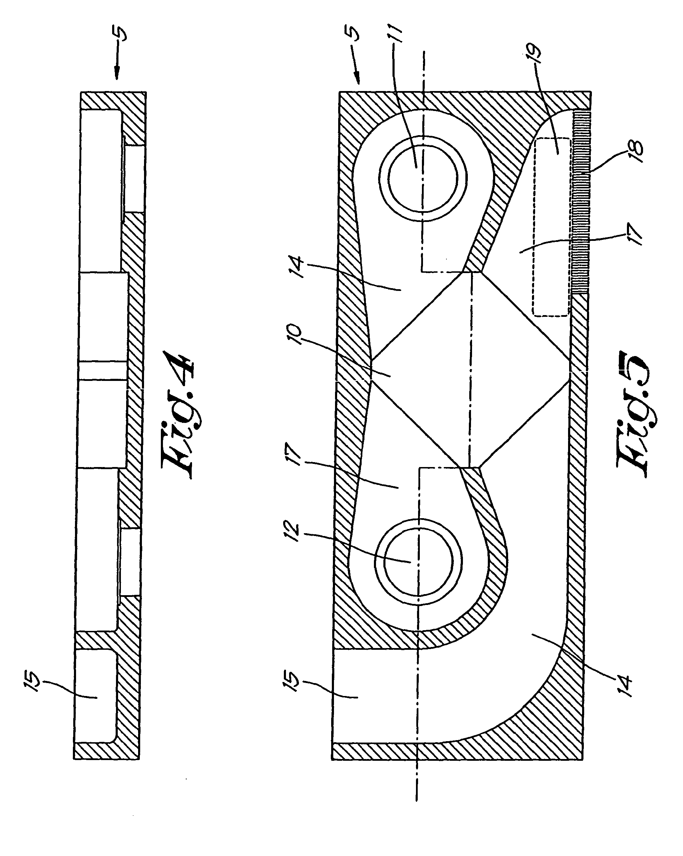

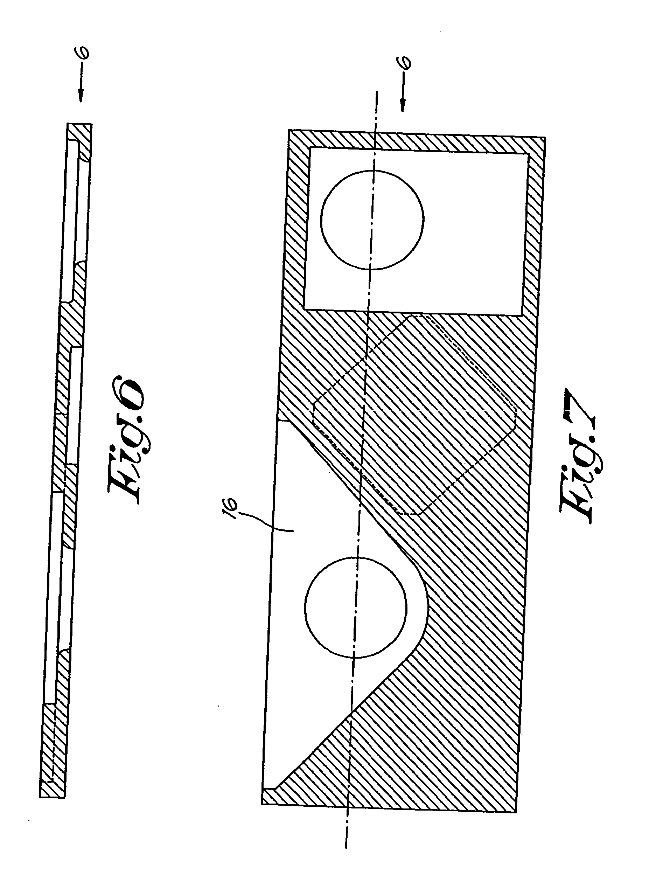

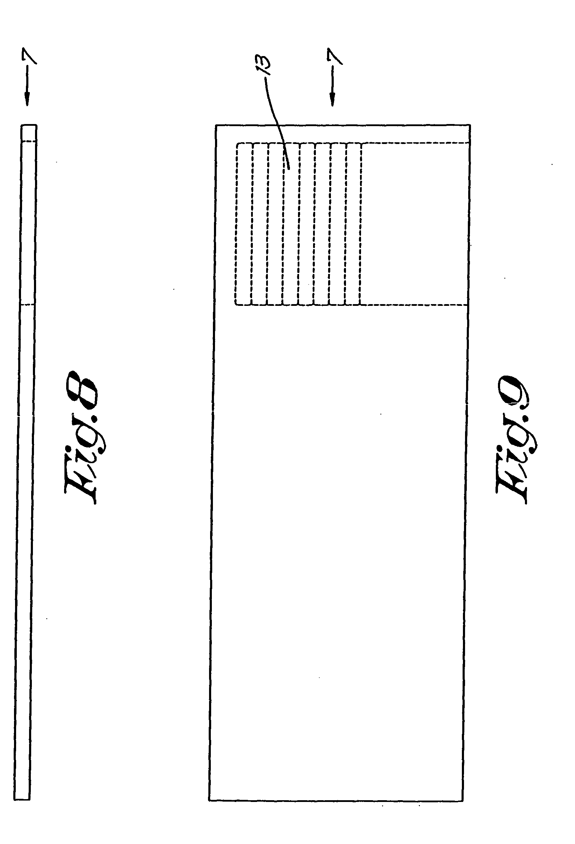

The ventilating element 1 in particular consists of a bottom plate 5 represented in figures 4 and 5, a centre part 6 represented in figures 6 and 7, and a top plate 7 represented in figures 8 and 9.

The design of said plates 5 to 7 is such that, when these plates 5 to 7 are provided onto one another, as represented in figures 2 and 3, their assembly will be provided with an outlet duct 8 and a supply duct 9 with a heat exchanger 10 provided in between in the hard foam element.

Further, in the hard foam element is provided a first electrically driven discharge fan 11 in the present embodiment for the forced discharge of the inside air, and a second electrically driven supply fan 12 to draw in fresh supply air.

The outlet duct 8 is formed in particular of a suction/discharge opening provided in the top plate 7 and situated on the inside 3 of the house, the discharge fan 11 situated underneath it, a cavity 14 situated in the bottom plate 5 leading from the discharge fan 11 to the heat exchanger 10 and, on the other side thereof, to the exhaust/discharge opening 15 provided in the bottom plate 5 and situated on the outside 4 of the house.

The supply duct 9 is formed of a suction/supply opening 16 provided in the centre part 6 and situated on the outside 4 of the house, the supply fan 12, a cavity 17 situated in the bottom plate 5 leading from the supply fan 12 to the heat exchanger 10 and, on the other side thereof, to the exhaust/supply opening 18 provided in the bottom plate 5 and situated on the inside of the house.

In the given embodiment, an air filter 19 is provided in line with the exhaust/supply opening 18.

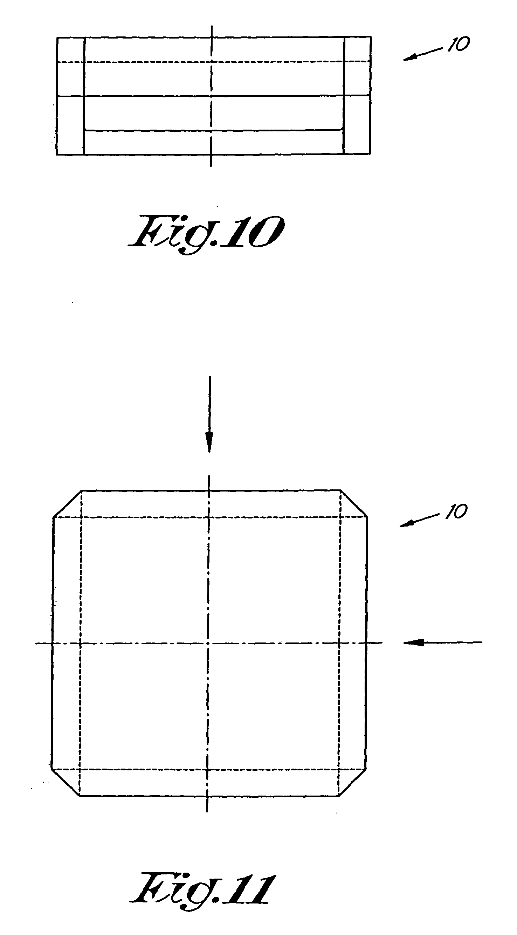

Figures 10 and 11 represent the heat exchanger 10 in more detail. This one is of the type which provides for a cross flow at right angles of the exhaust air and the supplied air.

The hard foam which is used here is hard EPS or expanded polystyrene, which has sufficient bearing capacity to support a heat exchanger and fans for the supply and exhaust of air without these appliances needing any further accessories or fixing screws.

This makes it possible to install said appliances without any technical operations or requirements by pushing them in the recesses in the hard foam provided to that end.

The working of the ventilating element 1 according to the invention is simple and as follows.

An optimal working is obtained when both fans 11 and 12 are operational.

The supply fan 12 sucks in fresh air from outside 4 the house, which is carried through the supply duct 9, as of the suction/supply opening 16, through the heat exchanger 10 and via the exhaust/supply opening 18 to the inside 3 of the house.

The discharge fan 11 sucks in "polluted" air from the inside 3 of the house, which is carried through the outlet duct 8, as of the suction/discharge opening 13, through the heat exchanger 10 and via the exhaust/discharge opening 15 to outside 4 the house.

The heat exchanger 10 recycles the energy, either by cooling or by heating the sucked-in, fresh outside air, such that the ventilation as discussed produces only a limited temperature variation.

The supplied air and the exhaust air thus flow mainly diagonally through the ventilating element 1, in opposite directions, which results in an effective space utilization and heat exchange.

It is clear that only one or neither of the fans 11 and 12 can be excited.

It is also clear that the design of the ducts may vary, as well as the components made of hard foam.

The used hard foam, in this case hard EPS, is advantageous in that it is a relatively hard plastic which offers sufficient bearing capacity to support the inserted appliances. As a result, a tablet or a housing which may possibly be provided may have thin walls and are mainly used as an ornamental finish.

The hard foam is sufficiently flexible and deformable or compressible, which makes it possible to provide a mould with limited tolerances of for example 0.1 mm.

Moreover, EPS is easy to process and it provides for a very effective thermal and acoustic insulation.

The elements out of which the ventilating element 1 according to the invention is composed are thick-walled in this case, such that the structure as a whole offers sufficient rigidity. The walls in particular have a thickness larger than 2 mm, and preferably larger than 3 mm, in this case in particular between 5 and 30 mm, but depending on the dimensions of the ventilating element 1, the dimensions of the appliances and the used plastic or the required characteristics, sizes may vary.

This characteristic offers the advantage that the used material must not have the same strength as the materials that are usually applied, such as PVC.

Thanks to said characteristic, the aforesaid elements can be made of a strongly insulating material which is easy to process, which qualities are important for the present application.

It is clear that a ventilating element 1 can be made of various materials or may comprise different materials.

The present invention is by no means limited to the embodiments described by way of example and represented in the accompanying drawings; on the contrary, such a ventilating element according to the invention can be made in many different forms and dimensions while still remaining within the scope of the invention.

## Claims

1. Ventilating element designed to be placed under a window (2), whereby the ventilating element (1) reaches from the inside (3) of the house to the outside (4) of the house, with a hard foam element or an assembly of hard foam elements, in which are provided an outlet duct (8) and a supply duct (9) with a heat exchanger (10) in between, **characterised in that** the heat exchanger can be installed without any technical operations or tools by pushing it in the recess in the hard foam provided to that end.

2. Ventilating element according to claim 1, with a driven discharge fan (11) provided in the outlet duct (8), **characterised in that** the discharge fan can be installed without any technical operations or tools by pushing it in the recess in the hard foam provided to that end.

3. Ventilating element according to claim 1 or 2, with a driven supply fan (12) provided in the supply duct (9), **characterised in that** the supply fan (12) can be installed without any technical operations or tools by pushing it in the recess in the hard foam provided to that end.

4. Ventilating element according to one or several of the preceding claims, **characterised in that** the outlet duct (8) and the supply duct (9) are provided mainly diagonally through the ventilating element (1), whereby the fans (11,12) are provided such that the air flows move in opposite directions in both ducts.

5. Ventilating element according to claim 1, **characterised in that** the hard foam element or the hard foam elements out of which the ventilating element (1) is composed, are made such that the provided heat exchanger and the supply and discharge fans can be supported by the latter without any additional accessories or fixing screws being required.

6. Ventilating element according to claim 1, **characterised in that** the wall thickness of the hard foam element or the hard foam elements out of which the ventilating element (1) is composed amounts to at least 2 mm.

7. Ventilating element according to claim 1, **characterised in that** the wall thickness of the hard foam element or the hard foam elements out of which the ventilating element (1) is composed amounts to at least 3 mm.

8. Ventilating element according to claim 1, **characterised in that** the wall thickness of the hard foam element or the hard foam elements out of which the ventilating element (1) is composed amounts to at least 10 mm.
